# EUROPEAN PATENT SPECIFICATION

(11) **EP 3 771 328 B1**
(45) Date of publication and mention of the grant of the patent: **08.11.2023**
(21) Application number: 19189723.0
(22) Date of filing: 02.08.2019
(51) Int. Cl.: A01F 25/20

(54) **DEVICE FOR CUTTING SILAGE FROM A SILO**
VORRICHTUNG ZUM SCHNEIDEN VON SILAGE AUS EINEM SILO
DISPOSITIF DE DÉCOUPE DE FOURRAGE À PARTIR D'UN SILO

(43) Date of publication of application: 03.02.2021
(73) Proprietor: Mathijssen, Johannes Adrianus Wilhelmus Maria, 4715 SL Rucphen (NL)
(72) Inventor: Mathijssen, Johannes Adrianus Wilhelmus Maria, 4715 SL Rucphen (NL)
(74) Representative: 't Jong, Bastiaan Jacob

(56) References cited:
- DE-U1- 29 611 851
- FR-A1- 2 187 644
- FR-A1- 2 258 330
- FR-A2- 2 216 198
- GB-A- 2 111 375
- US-A- 3 961 718

## Description

The invention relates to a device for cutting silage from a silo.

DE 1481446 describes a device for cutting silage from a silo, which is mounted at the back of a tractor. The device comprises a storage bunker, to which a driven milling cutter is arranged. A shielding plate is arranged over the driven milling cutter to protect the cutter when it is not cutting silage and the shielding plate is moved over the storage bunker when cutting silage. The storage bunker is provided at the bottom with a discharge opening to discharge cut silage.

A disadvantage of this device is that the device for cutting silage is brought along, when the cut silage is transported to the stables. So, the cutting of the silage and the transporting of the cut silage cannot be done parallel in time to each other. Furthermore, as the device is arranged on a tractor, when cutting silage, the device can only be displaced into the silo. The silage in the silo is thus not evenly removed over the width of the silo.

A device with the features of the preamble of claim 1 is known from GB 2111375 A.

It is an object of the invention to reduce or even remove the above mentioned disadvantages.

This object is achieved with a device for cutting silage from a silo comprising the features of claim 1.

Because the device according to the invention has a chassis with roll means, the device can autonomously advance into a silo, without the need of a tractor or other vehicle.

Furthermore, due to the first and second linear guides, the cutting means can be moved along the full width and height of the silage in the silo, such that the silage can be cut evenly.

The conveyor means allow for the cut silage to be transported into, for example, a separate container, which can be picked up by a tractor when it is full. So, the tractor no longer needs to wait, when the silage is cut, and the cutting means do not need to wait, when the tractor is transporting the cut silage into the stables.

In a preferred embodiment of the device according to the invention the cutting means have an elongate housing extending in the second direction, which housing has a feed opening extending substantially over the full length of the housing and a discharge opening arranged centrally and on the opposite side of the feed opening, and a cutting element arranged in the housing.

Preferably, the cutting element is a driven milling cutter having a cylindrical body with first cutting elements arranged on the cylindrical surface in a right-handed spiraled path from one end to the center of the cylindrical body and with second cutting elements arranged on the cylindrical surface in a left-handed spiraled path from the center to the other end of the cylindrical body.

The housing shields the cutter and guides the cut silage from the cutter towards the discharge opening. The feed opening provides access to the cutter, but as the device is typically always positioned against the silage in the silo, the cutter is still shielded from personnel present around the device.

In another preferred embodiment of the device according to the invention the conveyor means comprise a Jacob's ladder conveyor. A Jacob's ladder is a form of a conveyor belt that is used to transport bulk goods up. On a Jacob's ladder there are ridges, bulkheads or trays (cups) that ensure that the bulk does not fall, roll or slide downwards. Such a Jacobs's ladder allows for an efficient transportation of the cut silage up and into a storage container or storage bunker.

Preferably, the cutting means are suspended from a belt extending parallel to the Jacob's ladder conveyor to cover a part of the conveyor and wherein the belt is driven to move the cutting means along the second linear guide.

The cutting means can be arranged to an end of the belt, wherein the other end of the belt is wound up on a spool to move the cutting means up and down. Or the cutting means are arranged to a endless belt, wherein the belt is arranged around two spaced apart rollers. The belt covers the part of the Jacob's ladder which is loaded with the cut silage and thus prevents that cut silage falls off the Jacob's ladder.

The storage bunker is open at the top and arranged to the sub-frame on the opposite side from the cutting means, wherein the conveyor means discharge the cut silage into the storage bunker.

The storage bunker is filled with cut silage via the open top. This allows for the cutting to continue when the tractor or other vehicle is busy distributing another batch of cut silage throughout the stables. When the tractor arrives at the device, the cut silage in the storage bunker can be transferred to a container of the tractor.

In a preferred embodiment of the device according to the invention the storage bunker is a high tipper, which is movable in at least the third direction between a low filling position and a high discharging position.

Preferably, a tipping axle is arranged to the sub-frame and wherein driving means, such as a hydraulic cylinder, are arranged between the sub-frame and the storage bunker, to move the storage bunker from the low filling position, up and over the tipping axle to the high discharge position, where the storage bunker tips over the tipping axle.

This allows for a vehicle with container to drive up to the device, lifting the storage bunker up to the discharge position and tipping the contents of the storage bunker into the container of the vehicle, after which the cutting process can continue and the vehicle can start distributing the collected cut silage.

In yet another embodiment of the device according to the invention a load cell is arranged between the sub-frame and the storage bunker to weigh the storage bunker.

The load cell allows for the device to cut a specific amount of silage, such that when collecting the cut silage from the storage bunker, a desired amount is present in the storage bunker.

In still another embodiment of the device according to the invention, the device comprises a controller for controlling movement of the sub-frame along the first guide, movement of the cutting means along the second guide and the cutting means.

The controller allows for the device to work autonomously and receive orders for a specific amount of cut silage, which can then be collected by an autonomous vehicle, which distributes the silage throughout the stables.

These and other features of the invention will be elucidated in conjunction with the accompanying drawings.

Figure 1 shows a perspective view of an embodiment of a device according to the invention positioned in a silo.

Figures 2A and 2B show a side view of the device according to figure 1.

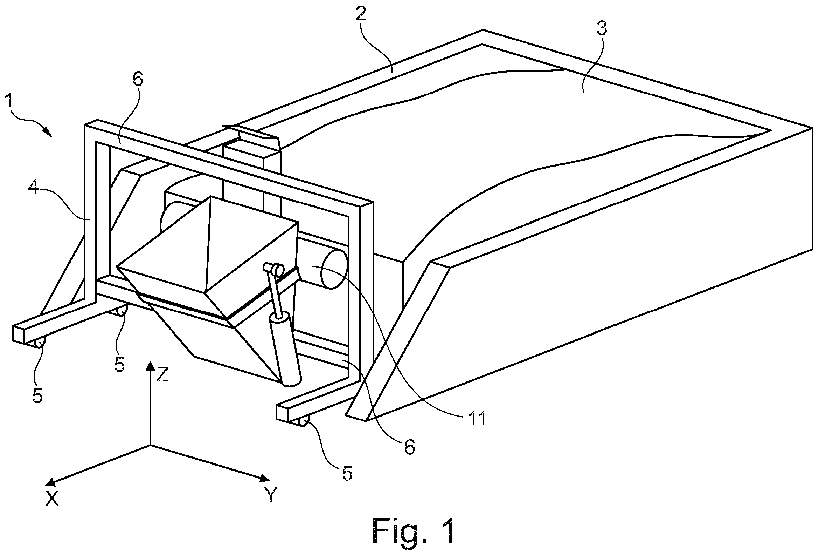

Figure 1 shows an embodiment of an embodiment 1 of a device according to the invention positioned in a silo 2 filled with silage 3.

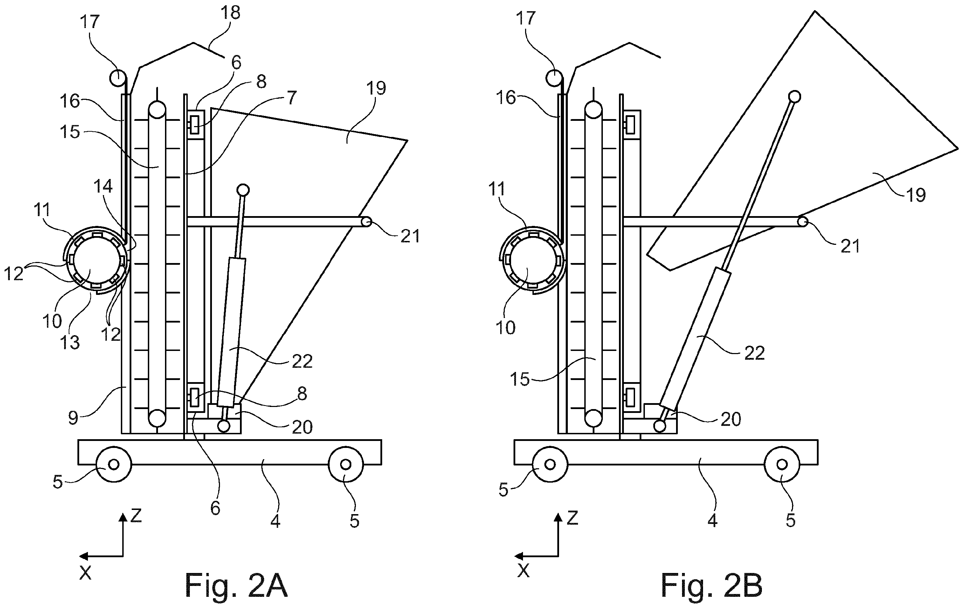

The device 1 has a chassis 4 provided with rollers 5, such that the device can move in a first direction X. The chassis 4 is provided with two U-shaped beams 6 which provide a first linear guide. A sub-frame 7 (see figures 2A and 2B) is guided with wheels 8 in the U-shaped beams 6, such that the sub-frame 7 is movable in the second direction Y.

A second linear guide 9, extending in the third direction Z, guides a milling cutter 10, 11. The milling cutter 10, 11 has a cylindrical body 10 with cutting elements 12 and a housing 11. The housing 11 is provided with a feed opening 13 along which silage 3 enters the milling cutter 10, 11 and a discharge opening 14 along which cut silage is fed to the Jacobs's ladder conveyor 15.

The housing 11 is supported from a belt 16, which is wound on a reel 17, such that the milling cutter 10, 11 can be moved up and down along the second linear guide 9.

At the top of the Jacobs's ladder conveyor 15, the cut silage is deflected by a deflector plate 18 and discharged into a storage bunker 19.

Figure 2A shows the storage bunker 19 in the low filling position, while figure 2B shows the storage bunker in the high discharging position.

In the low filling position, the storage bunker 19 rests on a load cell 20 to weigh the contents of the storage bunker 19. The storage bunker 19 is kept in position by a tipping axle 21 and an hydraulic cylinder 22.

When the contents in the storage bunker 19 is to be discharged in for example a container of a tractor, then the hydraulic cylinder pushes the storage bunker 19 upwards, such that the storage bunker 19 tips over the tipping axle 21 and the contents pours out of the storage bunker 19.

Due to the first linear guide 6 and second linear guide 9 as well as the rollers 5, the milling cutter 10, 11 can be positioned over the full frontal surface of the pile of silage 3 in the silo 2 to cut the silage 3 and collect the cut silage in the storage bunker 19. Preferably, this positioned is controlled by a controller, such that the silage cutting process can be autonomous.

## Claims

1. Device (1) for cutting silage from a silo comprising:
- a chassis (4) extending in a first direction (X) and a second direction (Y) perpendicular to the first direction (X);
- roll means (5), such as wheels, arranged to the chassis (4) for rolling the chassis in the first direction (X) ;
- a first linear guide (6) arranged to the chassis (4) and extending in the second direction (Y);
- a sub-frame (7) arranged to and guided by the first linear guide (6);
- a second linear guide (9) arranged to the sub-frame (7);
- cutting means (10, 11) for cutting silage, which cutting means (10, 11) are arranged to and guided by the second linear guide (9);
- conveyor means (15) arranged to the sub-frame (7), which conveyor means convey (15) cut silage in the third direction (Z);
**characterized by**
- a storage bunker (19) open at the top and arranged to the sub-frame (7) on the opposite side from the cutting means (10, 11), wherein the conveyor means (15) discharge the cut silage into the storage bunker (19),
wherein the second linear guide (9) extends in the third direction perpendicular to both the first (X) and second direction (Y).

2. Device (1) according to claim 1, wherein the cutting means (10, 11) have an elongate housing (11) extending in the second direction (Y), which housing (11) has a feed opening (13) extending substantially over the full length of the housing (11) and a discharge opening (14) arranged centrally and on the opposite side of the feed opening (13), and a cutting element (12) arranged in the housing (11).

3. Device (1) according to claim 2, wherein the cutting element (12) is a driven milling cutter having a cylindrical body (10) with first cutting elements (12) arranged on the cylindrical surface in a right-handed spiraled path from one end to the center of the cylindrical body (10) and with second cutting elements (12) arranged on the cylindrical surface in a left-handed spiraled path from the center to the other end of the cylindrical body (10).

4. Device (1) according to any of the preceding claims, wherein the conveyor means comprise a Jacob's ladder conveyor (15).

5. Device (1) according to claim 4, wherein the cutting means (10, 11) are suspended from a belt (16) extending parallel to the Jacob's ladder conveyor (15) to cover a part of the conveyor and wherein the belt (16) is driven to move the cutting means (10, 11) along the second linear guide (9).

6. Device (1) according to claim 1, wherein the storage bunker (19) is a high tipper, which is movable in at least the third direction (Z) between a low filling position and a high discharging position.

7. Device (1) according to claim 6, wherein a tipping axle (21) is arranged to the sub-frame (7) and wherein driving means, such as a hydraulic cylinder (22), are arranged between the sub-frame (7) and the storage bunker (19), to move the storage bunker (19) from the low filling position, up and over the tipping axle (21) to the high discharge position, where the storage bunker (19) tips over the tipping axle (21).

8. Device (1) according to any of the preceding claims, wherein a load cell (20) is arranged between the sub-frame (7) and the storage bunker (19) to weigh the storage bunker (19).

9. Device (1) according to any of the preceding claims, wherein the device (1) comprises a controller for controlling movement of the sub-frame (7) along the first guide (6), movement of the cutting means (10, 11) along the second guide (9) and the cutting means (10, 11).

## Patentansprüche

1. Vorrichtung (1) zum Schneiden von Silage aus einem Silo, umfassend:
- ein Chassis (4), das sich in einer ersten Richtung (X) und einer zweiten Richtung (Y) senkrecht zur ersten Richtung (X) erstreckt;
- Rollmittel (5), beispielsweise Räder, die am Fahrgestell (4) angeordnet sind, um das Fahrgestell in die erste Richtung (X) zu rollen;
- eine erste Linearführung (6), die am Chassis (4) angeordnet ist und sich in die zweite Richtung (Y) erstreckt;
- einen Unterrahmen (7), der an der ersten Linearführung (6) angeordnet und von dieser geführt ist;
- eine zweite Linearführung (9), die am Unterrahmen (7) angeordnet ist;
- Schneidmittel (10, 11) zum Schneiden von Silage, wobei die Schneidmittel (10, 11) an der zweiten Linearführung (9) angeordnet sind und von dieser geführt werden;
- Fördermittel (15), die am Unterrahmen (7) angeordnet sind und die geschnittene Silage in die dritte Richtung (Z) fördern (15);
**gekenzeichnet durch**
- einen nach oben offenen Vorratsbunker (19), der am Unterrahmen (7) auf der der Schneideinrichtung (10, 11) gegenüberliegenden Seite angeordnet ist, wobei die Fördereinrichtung (15) die geschnittene Silage in den Vorratsbunker abgibt (19),
wobei sich die zweite Linearführung (9) in der dritten Richtung senkrecht sowohl zur ersten (X) als auch zur zweiten Richtung (Y) erstreckt.

2. Vorrichtung (1) nach Anspruch 1, wobei die Schneidmittel (10, 11) ein längliches, sich in der zweiten Richtung (Y) erstreckendes Gehäuse (11) aufweisen, welches Gehäuse (11) eine sich im Wesentlichen erstreckende Zuführöffnung (13) aufweist über die gesamte Länge des Gehäuses (11) und eine mittig und auf der gegenüberliegenden Seite der Zuführöffnung (13) angeordnete Austragsöffnung (14) sowie ein im Gehäuse (11) angeordnetes Schneidelement (12).

3. Vorrichtung (1) nach Anspruch 2, wobei das Schneidelement (12) ein angetriebener Fräser ist, der einen zylindrischen Körper (10) mit ersten Schneidelementen (12) aufweist, die auf der zylindrischen Oberfläche in einer rechtsdrehenden Spiralbahn angeordnet sind ein Ende zur Mitte des zylindrischen Körpers (10) und mit zweiten Schneidelementen (12), die auf der zylindrischen Oberfläche in einer linksgängigen spiralförmigen Bahn von der Mitte zum anderen Ende des zylindrischen Körpers (10) angeordnet sind.

4. Vorrichtung (1) nach einem der vorhergehenden Ansprüche, wobei die Fördermittel einen Jakobsleiterförderer (15) umfassen.

5. Vorrichtung (1) nach Anspruch 4, wobei die Schneidmittel (10, 11) an einem Band (16) aufgehängt sind, das sich parallel zum Jakobsleiter-Förderer (15) erstreckt, um einen Teil des Förderers abzudecken, und wobei das Band ( 16) wird angetrieben, um die Schneidmittel (10, 11) entlang der zweiten Linearführung (9) zu bewegen.

6. Vorrichtung (1) nach Anspruch 1, wobei der Vorratsbunker (19) ein Hochkipper ist, der zumindest in der dritten Richtung (Z) zwischen einer niedrigen Füllposition und einer hohen Entladeposition bewegbar ist.

7. Vorrichtung (1) nach Anspruch 6, wobei am Unterrahmen (7) eine Kippachse (21) angeordnet ist und wobei zwischen dem Unterrahmen (7) Antriebsmittel, beispielsweise ein Hydraulikzylinder (22), angeordnet sind. 7) und den Lagerbunker (19), um den Lagerbunker (19) von der niedrigen Füllposition nach oben und über die Kippachse (21) in die hohe Entladeposition zu bewegen, wo der Lagerbunker (19) über die Kippachse kippt Achse (21).

8. Vorrichtung (1) nach einem der vorhergehenden Ansprüche, wobei zwischen dem Untergestell (7) und dem Lagerbunker (19) eine Wägezelle (20) zum Wiegen des Lagerbunkers (19) angeordnet ist.

9. Vorrichtung (1) nach einem der vorhergehenden Ansprüche, wobei die Vorrichtung (1) eine Steuerung zum Steuern der Bewegung des Unterrahmens (7) entlang der ersten Führung (6), der Bewegung der Schneidmittel (10, 11) entlang der zweiten Führung (9) und der Schneideinrichtung (10, 11).

## Revendications

1. Dispositif (1) de découpe d'ensilage d'un silo comprenant :
- un châssis (4) s'étendant selon une première direction (X) et une deuxième direction (Y) perpendiculaire à la première direction (X) ;
- des moyens de roulement (5), tels que des roues, disposés sur le châssis (4) pour faire rouler le châssis dans la première direction (X) ;
- un premier guide linéaire (6) disposé sur le châssis (4) et s'étendant dans la deuxième direction (Y) ;
- un sous-châssis (7) agencé et guidé par le premier guide linéaire (6) ;
- un deuxième guide linéaire (9) disposé sur le sous-châssis (7) ;
- des moyens de coupe (10, 11) pour couper l'ensilage, lesquels moyens de coupe (10, 11) sont agencés et guidés par le deuxième guide linéaire (9) ;
- des moyens de transport (15) disposés sur le sous-châssis (7), lesquels moyens de transport transportent (15) l'ensilage coupé dans la troisième direction (Z) ;
**caractérisé par**
- une trémie de stockage (19) ouverte en haut et disposée sur le faux-châssis (7) du côté opposé aux moyens de coupe (10, 11), dans laquelle les moyens de transport (15) déchargent l'ensilage coupé dans la trémie de stockage (19),
dans lequel le deuxième guide linéaire (9) s'étend dans la troisième direction perpendiculaire à la fois à la première (X) et à la deuxième direction (Y).

2. Dispositif (1) selon la revendication 1, dans lequel les moyens de coupe (10, 11) présentent un boîtier allongé (11) s'étendant selon la deuxième direction (Y), lequel boîtier (11) présente une ouverture d'alimentation (13) s'étendant sensiblement sur toute la longueur du boîtier (11) et une ouverture d'évacuation (14) disposée au centre et sur le côté opposé de l'ouverture d'alimentation (13), et un élément de coupe (12) disposé dans le boîtier (11).

3. Dispositif (1) selon la revendication 2, dans lequel l'élément de coupe (12) est une fraise entraînée comportant un corps cylindrique (10) avec des premiers éléments de coupe (12) disposés sur la surface cylindrique selon une trajectoire en spirale vers la droite depuis une extrémité au centre du corps cylindrique (10) et avec des seconds éléments coupants (12) disposés sur la surface cylindrique selon un trajet en spirale vers la gauche depuis le centre vers l'autre extrémité du corps cylindrique (10).

4. Dispositif (1) selon l'une quelconque des revendications précédentes, dans lequel les moyens de transport comprennent un convoyeur à échelle de Jacob (15).

5. Dispositif (1) selon la revendication 4, dans lequel les moyens de coupe (10, 11) sont suspendus à une courroie (16) s'étendant parallèlement au convoyeur à échelle de Jacob (15) pour recouvrir une partie du convoyeur et dans lequel la courroie (1) 16) est entraîné pour déplacer les moyens de coupe (10, 11) le long du deuxième guide linéaire (9) .

6. Dispositif (1) selon la revendication 1, dans lequel la trémie de stockage (19) est une benne haute, qui est mobile selon au moins la troisième direction (Z) entre une position basse de remplissage et une position haute de déchargement.

7. Dispositif (1) selon la revendication 6, dans lequel un essieu basculant (21) est disposé au faux-châssis (7) et dans lequel des moyens d'entraînement, tels qu'un vérin hydraulique (22), sont disposés entre le faux-châssis (22). 7) et la trémie de stockage (19), pour déplacer la trémie de stockage (19) de la position de remplissage basse, vers le haut et au-dessus de l'essieu basculant (21) jusqu'à la position de déchargement haute, où la trémie de stockage (19) bascule sur la trémie de basculement axe (21).

8. Dispositif (1) selon l'une quelconque des revendications précédentes, dans lequel une cellule de pesée (20) est disposée entre le sous-châssis (7) et la trémie de stockage (19) pour peser la trémie de stockage (19).

9. Dispositif (1) selon l'une quelconque des revendications précédentes, dans lequel le dispositif (1) comprend un contrôleur pour contrôler le mouvement du sous-châssis (7) le long du premier guide (6), le mouvement des moyens de coupe (10, 11) le long du deuxième guide (9) et des moyens de coupe (10, 11).
